(19)

Europäisches
Patentamt
European
Patent Office
Office européen
des brevets

(11) **EP 2 385 091 A1**

(12) **EUROPEAN PATENT APPLICATION**
published in accordance with Art. 153(4) EPC

(43) Date of publication:
**09.11.2011 Bulletin 2011/45**

(51) Int Cl.:
*C10B 53/00* (2006.01)  *F23G 5/027* (2006.01)

(21) Application number: **09836456.5**

(22) Date of filing: **28.12.2009**

(86) International application number:
**PCT/RU2009/000730**

(87) International publication number:
**WO 2010/077182 (08.07.2010 Gazette 2010/27)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.12.2008 RU 2008152111**

(71) Applicant: **Pashkin, Sergey Vasiljevich Moscow 121151 (RU)**

(72) Inventor: **Pashkin, Sergey Vasiljevich Moscow 121151 (RU)**

(74) Representative: **Hands, Lewis Roger Handsome I.P. Ltd 3 Chapel Row Bath, North East Somerset BA1 1HN (GB)**

(54) **METHOD FOR PROCESSING ORGANIC WASTE AND A DEVICE FOR CARRYING OUT SAID METHOD**

(57)     The invention relates to alternative power engineering, more specifically to methods and devices for processing organic waste into thermal and electrical energy, liquid, solid and gaseous energy carriers and into other useful chemical products. The method differs from a known method for the pyrolysis processing of organic waste through air-free thermal heating in that the thermal heating is carried out in an aqueous medium at pressures in the medium that are greater than the pressure of saturated water vapour at the highest pyrolysis temperature. As a result, humid and liquid organic waste can be processed into combustible energy carriers without pre-drying, and the heat energy produced when the pyrolysis products are burned can be used both for maintaining the organic waste processing process and for producing commercial heat and electrical energy.

FIG. 1

**Description**

The invention rentes to the field of energetic, and more specifically, to alternative independent sources for heat and electricity, liquid, solid and gaseous energy carriers, as well as useful chemical products during the pyrolysis treatment of municipal, agricultural and industrial organic wastes, particularly wood, leaves, manure and manure runoff, bird droppings, peat, rotting straw, rubber and plastic chips, black liquor, sewage sludge, liquid waste food, brewing and alcohol industry, and other types of liquid and solid organic wastes.

Widely known methods of producing heat and electricity, fuels and chemicals by thermal processing of organic waste. The simplest way to generate energy front waste is burning in the kilns, furnaces and other devices to produce heat and steam, where steam can then be used in steam engines to generate electricity.

Another way to get energy, and energy carriers is the gasification of organic waste, in particular, wood chocks in gasification facilities, is the process or thermal decomposition of the waste under high temperatures (up to 1100 C) in the process of burning the same waste with limited access of air. Obtained in these devices producer gas can be used not only as a boiler fuel, but also as fuel for internal combustion engines and is the raw material for production of synthetic liquid and gaseous fuels (see, e.g. RU 2303192 C1, InC F22B 33/18, C10J 3/86 from 06.29.2006, pub. 20.07.2007 Bull. No 20). Because of the presence in the generator gas product of combustion and nitrogen, gas generator has a low calorific value and limited opportunities for application in the synthesis of motor fuels.

The already low energy performance gas-producing facilities are compounded by large dimensions of equipment for drying of lumpy material. This is a consequence of low efficiency of transfer of heat from hot gas to the processing raw materials due to low thermal conductivity of gas and raw materials, inability to quickly raise the temperature to 350 C or more degrees Celsius inside the lump of raw materials for its gas supply until the water evaporates, contained in this raw materials. Due to the heterogeneity of material composition, humidity, size of pieces, as well as the long duration of output units on the operating mode, this technology is difficult to automate.

These drawbacks are eliminated in the pyrolysis of waste processing technologies, conducted at 400 - 900 C without air access. Pyrolysis products have a high calorific value, a wide range in composition derived hydrocarbons and are of greatest interest for use directly in power facilities or for further chemical processing into fuel.

Known method for processing of organic materials by pyrolysis, protected by a patent (RU 2260615 C1, InC C10B 49/00, 47/16, 7/02 from 21.04.2004, pub. 20.09.2005 Bull. No 26), involves rapid pyrolysis in a stream, of pre-prepared raw material (crushed to a size of about a millimeter and dried) at temperatures of 450 - 800 C depending on the chosen technology for the final product. Thermal energy is transmitted by contact material, through its contact with the preheated having high thermal conductivity, rolling working bodies - biles. Efficient heat transfer by contact of the solid heated bits to dried shredded raw materials ensures rapid heating and gasification of the entire mass of the feedstock. The possibility of continuous operation of the plant gives it goos performance, efficiency and reliability. High degree of automation enables reliable control of the set parameters of the process. Pyrolysis products are used directly for heat and electricity and for conversion into liquid, solid and gaseous fuels with the desired properties.

However, this pyrolysis technology, as well as the above-mentioned gas-based technologies and direct combustion of waste, require pre-drying the waste (for pyrolysis of waste moisture content should not exceed usually 10%, and for gas-generating plants and facilities in direct incineration - 30 - 50%), which spent a considerable amount of energy, require special drying devices. Allocated during drying fumes and gases can create environmental problems of emissions, especially if the waste contains mercury, lead, zinc, sulfur, dioxins, benzopyrene and other impurities (leaves in the city, industrial waste, etc.). Pyrolysis of the above technologies such wastes as liquid effluents livestock farms, fresh bird droppings, waste from food production, sewage blank liquor, etc., with humidity to 90 - 90%, is too costly, environmentally and economically viable (more details on the economic and technical aspects of the issue see, for example: "Biomass and Bioenergy wood. Monograph" / D.A Zanegin, Lav. Voskoboinikov, V.A. Kondratyuk, V.M. Shchelokov - Moscow:, 2008. - Vol.1 - 428p. - Vol.2 - 456p.)

The purpose of this invention is to eliminate these drawbacks, increasing economic and environmental performance of pyrolysis technology for processing wet and liquid organic wastes. Said aim is achieved by a known method of recycling organic waste, which includes grinding the waste to gasification in the thermochemical reactor by pyrolysis and supply of gaseous pyrolysis products of combustion powder facilities or the chemical processing of synthetic fuels water is added in the crushed mass of waste and mixed so that the concentration of water formed in the pulp was in the range 30 - 99%, then the formed pulp fed by a high pressure pump or a piston in a termochemical reactor to provide a pressure pulp above the saturated vapor pressure of water over the entire range of operating temperatures thermochemical reactor, the pulp is heated to thermochemical reactor to a temperature at which the pyrolysis of organic waste to form a low molecular weight compounds ($CO$, $CO_2$, $H_2$, $CH_4$, methanol, dimethyl ether, etc.), was isolated solid fraction of the pyrolysis products, pyrolysis products with water is cooled to lower their pressure in the including by performing useful work, separate the gas fraction containing flammable gases and vapors of volatile liquids from the liquid phase, the gas fraction is directed into the combustion chamber either by chemical processing of synthetic fuel from the liquid phase, consisting mostly of water, extract useful products (eg, acetic acid, salt, etc,) and then return it to the production cycle, adding to the crushed waste.

Another difference is the way that the pressure of the slurry in a thermochemical reactor creates within the 22.0 - 40.0 MPa, the maximum temperature in the above thermochemical reactor was adjusted to 350 - 900 C and provide an extract of pulp at these parameters within the 0,1 - 10 minutes.

The third difference is that the heating pulp and cooling of slurry water from pyrolysis products produced by heat exchange between them in the recuperative heat exchanger, where the flow of water from the pyrolysis products and initial pulp move in opposite directions, and heat energy to offset heat losses sum to the flow of pulp in additional heat exchanger connected to the hot part of the recuperative heat exchanger, for example, taking the heat from the exhaust gases after combustion powder facility.

The fourth difference is that the allocation of non-condensable gases (H2, CO, CH4) from the pyrolysis products produced from the flow at temperatures below 370 C, regardless of pressure, and volatile liquids (ethanol, methanol, dimethyl ether, etc.) at temperatures below 240 C and pressures below 10 spa at a time when the bulk of the water is in the condensed state, while reducing the pressure of gaseous pyrolysis products produced by throttling or completion of the work in the detander. Higher than pressure and temperature of combustible components allow produce in optimal conditions the synthesis reaction of hydrocarbons on catalysts and without the booster compressor to send fuel directly from the thermochemical reactor in the combustion chamber of gas turbine and diesel engines.

The fifth difference is that in creating the pulp in water, adding additives, for example, such as sodium hydroxide or sodium sulfate. Additives accelerate the process of pyrolysis as by lowering the activation energy of chemical reactions, and due to the dissolution and homogenization of certain types of solid waste. Additives of this type are widely used, particularly in paper industry for pulping.

The device for implementing the proposed method, the goal is achieved the fact that in the known device for processing of organic wastes comprising grinder of waste, thermochemical reactor for pyrolysis of waste, power facility, the reactor of synthesis from pyrolysis gases and the fractionator for the separation of fuel, the device is provided witch: a bunker with a mixer to prepare the pulp from a mixture of griding organic waste with water, pumps or piston to create pressure in the flow passing through the thermochemical reactor pulp; chamber for receiving and removing the solid fraction of the pyrolysis products, pyrolysis gas separator to separate gas from liquid fraction.

Another difference in the device according to the proposed method lies in the fact that, for heating the pulp up to operating temperature in the thermochemical reactor using recuperative heat exchanger spiral type and the additional heat exchanger heating the pulp from the external heat source, with an additional heat exchanger on the outlet side of pulp set chamber for ach.

The third difference is that in the thermochemical reactor at the output of products of thermochemical reactions of the pyrolysis zone expander set for utilization of the potential energy of compression of pyrolysis products.

The fourth difference is that as the power facility was used without booster compressor internal combustion engine, diesel engine, gas turbine engine, the steam engine, the Stirling engine, and others with an electric generator and heat recovery boiler exhaust.

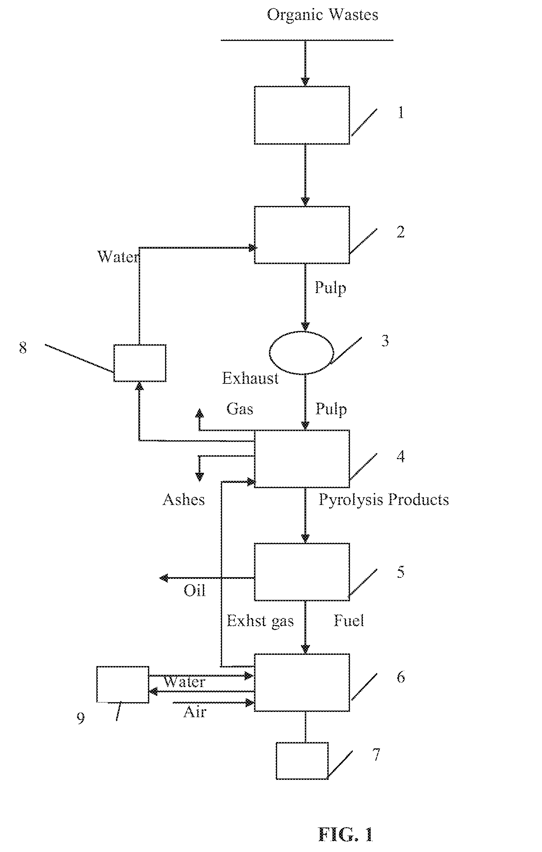

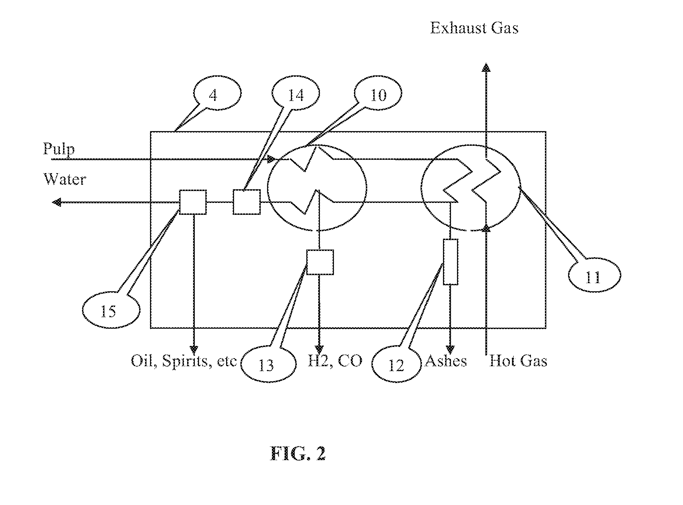

The essence of the invention is illustrated in FIG. 1 and Fig.2.

In Figure 1 shows a simplified flow chart of processing of organic waste according to the proposed method.

In Figure 2 shows a simplified diagram of the thermochemical reactor.

Technological scheme for processing of organic waste presented in Figure 1 contains a grider 1 of organic waste, hopper 2 with a mixer (not shown) for making pulp, high-pressure pump 3 to create the flow of cooked pulp through a thermochemical reactor 4, where the pyrolysis waste and ash removal from the stream, hydrocarbon synthesis reactor 5 with a conclusion of the dividing fractions (synthesis reactor may be absent if it is not necessary); motor 6 together with the electric generator 7 for generating electric energy, heat recovery steam generator 8 of water coming out of the thermochemical reactor and dissolved in water the residual products of pyrolysis; recovery 9 waste heat from the engine cooling system. The figure does not indicate a device for utilization of thermal energy of exhaust gases of the engine and detander for energy recovery of compression of pyrolysis products.

Thermochemical reactor 4 (see Figure 2) contains a recuperative heat exchanger 10 for preheating the pulp and cooling of the pyrolysis products and the additional heat exchanger 11 for heating the pulp and to obtain a thermochemical reactor set temperature ot pyrolytic process. Thermochemical reactor 4 is equipped with chamber 12, light gas gas separator 13, a device for pressure reduction 14 and gas separator vapors of volatile liquids 15.

The proposed technological scheme for processing organic waste works as follows. Organic waste such as sawdust, fallen leaves, peat moss, liquid manure runoff, bird droppings, alcohol tillage, etc. come to the grinder waste 1, where the size of the solid fraction (if any) shall be communicated to those that they do not get stuck in the high-pressure pump and hydrodynamic tract. Actually their size should not exceed a few millimeters. Restrictions on the size of the particles associated with the conventional pyrolytic process here is much less important, since the proposed technology is not the evaporation oaf water from the waste, which selects the heat energy from the energy source and, secondly, heat transfer away from the heated water is much more efficient heat transfer from the heated gas (about two orders of magnitude).

Chopped up and the separated largest waste coming into the hopper for making pulp 2. Here comes the same water, which is best obtained from thermochemical reactor 4. Most of the wastes of biological origin are more than 50% humidity (moisture of wood content of about 50%, moisture of litter and manure runoff content - 80 - 95%). Excess water flowing into the hopper for making pulp of 2 of the thermochemical reactor 4, is discharged into the sewer or used for other purposes.

The minimum moisture content of cooked pulp is determined by the possibilities of the pump and reservoir tract to its pumping. For some types of waste (coal, rubber chips, etc.), the minimum humidity can reach 30 - 40%, for the majority of wastes of biological origin, the minimum humidity is 80 - 90%.

The homogeneity of the pulp is provided with a mechanical stirrer (the scheme is no the agitator can also "wash" the waste from adhering dirt, sand, etc., which due to its greater density sinks to the bottom of the hopper and periodically removed.

Through high-pressure pump 3, is usually pump membrane, prepared pulp is fed into thermochemical reactor 4. Instead of high pressure pump can be used, in particular, hydraulic press.

In the thermochemical reactor 4 (see Figure 2) pulp enters the recuperative heat exchanger 10 where, moving in a forward direction, its temperature is rising steadily due to heat exchange with the moving in the opposite direction of the pyrolysis products. The temperature of the pyrolysis products can reach 350 - 900 C. It is therefore important that the pressure of pulp would be such that the water vapor pressure was always smaller than its. In this case, we avoid burnout, arising out of a steam pads, which dramatically reduces the efficiency of heat transfer, and in some cases can lead to the destruction of the heat exchanger. On the other hand, we thus avoid scale deposits on the walls, which also affects the efficiency of heat transfer and life of the heat exchanger. Due to lack of steam bags, that is, the lack of water evaporation, which requires large energy consumption, phase transition of water from liquid to gaseous state in the proposed technology does not occur.

Pyrolysis of certain wastes (peat, wood, etc.) is accompanied by a certain temperature exothermic process, i.e., occurs with the release of energy, but usually not enough to bring the technological process of pyrolysis at a given temperature. Therefore, the hot end of the regenerative heat exchanger 10 installed additional high-temperature heat exchanger 11, which is due to the energy obtained by burning of pyrolysis gases, or energy of the exhaust gas power plant 4, or electricity derived from this stetting, or otherwise reach the desired temperature pyrolysis. The volume of secondary circuit heat exchanger 11, flow rate of recycled waste it is calculated so as to provide a sufficiently large (typically 0.1 - 10 min) residence time of waste at high temperatures because the speed of some thermochemical processes going on monomolecular mechanism and practically depends only on temperature reagents. If you do not want to receive solid foods such as carbon powder, the temperature of the heat exchanger 11, as a rule, should not exceed 650 C. In these conditions, the water itself becomes an active oxidant of organic matter and effectively a reaction oaf solid carbon with water:

$$C + H2O = CO + H2.$$

Thus, one can translate all combustible condensed phase organic waste into gas phase. Noncombustible oxides and minerals to precipitate and are collected in chamber 12.

After the pyrolysis the pyrolysis products accompanied by water flows in the opposite loop recuperative heat exchanger 10. At temperatures of pyrolysis products less than 370, when the liquid phase of water is formed can be separated from the liquid light gases (H2, CO, CH4) with the gas separator 13 and sent them to the hydrocarbon synthesis reactor 5 for methyl and ethyl alcohol or 92 gasoline, or immediately to the power plant 6. But it is possible to separate them, along with volatile liquids (ethyl and methyl alcohol, dimethyl ether, etc.) using gas separator 15, after reducing the pressure to 10 Spa and below, using the device 14 and reducing the temperature to 240 C and below. In this case also provided the conditions for rectification method of isolation and separation of volatile liquids.

The water after passing through the thermochemical reactor 4 passes through the heat recovery steam generator in the hopper 2, hydrocarbons - for processing in the synthesis reactor 5 or 6 power facility, solid ash, which may contain useful substances - from chamber 12 for recycling or disposal.

Consider some examples of specific uses of the invention.

Example 1. Let the waste is sawdust moisture 50%. And suppose we have to recycle 0.1 kg of sawdust in the second (or 6 kg of sawdust per minute, or 360 kg of sawdust per hour or 8.64 tons of sawdust per day). We assume 90% moisture content of pulp.

Then we get:

1. Taking into account the calorific value of combustible mass of Wood about 20 MJ / kg, the total thermal capacity of the plant, provided that all the energy of wood will go into heat energy, is:

$$Wt = 0.1 \ (kg/s) \ x \ 0.5 \ x \ 20 \ (MJ/kg) = 1 \ MW \ thermal \ power.$$

2. Thermal energy fuel mass will be largely realized in the form of the combustion energy derived from the pyrolysis of combustible gases. With the assumption that the efficiency converting thermal energy into electrical energy 0.2, we generate electricity power:

$$We = 0.2 \ x \ Wt = 0.2 \ MW.$$

3. When wood ash 0,5% of fuel mass, the formation of ash will occur at a rate:

$$Ash = 0.1 \ (kg \ / \ s) \ x \ 0.5 \ x \ 0.005 = 0.00025 \ (kg \ / \ s), \ or \ 21.6 \ kg \ / \ day \ .$$

We estimate the energy costs of creating a flow out pulp from the pressure of P = 30 MPa:

So, you need to pump the volume of pulp:

$$Qp = 0.1 \ (kg \ / \ s) \ x \ (0.5 + 4.5) = 0.5 \ (kg \ / \ s) = 0.5 \ (l \ / \ s) = 0.0005 \ (m3 \ / \ s).$$

Power that you want to apply for a pump, is:

$$Wp = Qp \ x \ P = 30 \ x \ 1,000,000 \ x \ 0.0005 \ (W) = 15 \ kW.$$

Taking into account the efficiency Pump 0,5 (usually higher) costs of pumping will be:

$$15 \ / \ 0.5 = 30 \ kW.$$

If the Sow of pyrolysis products deliver defender, then, given that the flow rate of the pyrolysis products by gas is much larger volume flow of the pulp, the cost of pumping the pulp will be significantly less.
Thus, the energy costs for pyrolysis under high pressure in the flow of water is not more than 15% of the electricity generated or no more than 3% of the heat energy from wood waste.
As for the effectiveness of obtaining volatile combustible gases for a given technological scheme of pyrolysis, is well known from numerous experiments (see link above -"Biomass wood and Bioenergy. Monograph") that elevated pressure and an increased concentration of water vapor leading to improved production of useful products pyrolysis.

Example 2. Processing 100 tons of poultry manure per day with a humidity of 95%

Making calculations similar to Example 1, with calorific value of combustible mass of litter 20 MJ / kg, taking the amount of minerals in the litter of 5% by dry weight, we get:

Thermal capacity:

$$Wt = 100000 \ x \ 20 \ x \ 0.05 \ / \ (24 \ x \ 3600) = 1, 16 \ MW;$$

Electricity (with efficiency = 0.2):

$$We = 0.2 \ x \ WT = 232 \ kW;$$

Costs for pumping manure at a pressure of 30 MPa:

$$Wp = 0.5 \times 30 \ (MPa) \times 100 \ (m3/day) / (24 \times 3600) = 17.4 \ kW;$$

Production of Minerals - ash (fertilizer):

$$W = 100000 \ (kg / day) \times 0.05 \times 0.05 = 250 \ kg / day.$$

Example 2 shows the efficiency of energy, fuel and fertilizer from manure in its moisture content 95%.
These examples show the effectiveness of the proposed method of processing organic waste to produce heat and electricity, as well as useful chemical products.

**Claims**

1.  Method for processing organic waste, comprising: grinding the waste, their gasification in the thermochemical reactor by pyrolysis and supply of gaseous pyrolysis products into combustion chamber of power facility or on the chemical processing of synthetic fuels, **characterized in that** a water is added into grinding mass of waste and mixed so that the concentration of water in the formed pulp was between 30 - 99%, then the formed pulp is fed by a high pressure pump or a piston in the thermochemical reactor to provide a pressure pulp above the saturated vapor pressure of water over the entire range operating temperature of thermochemical reactor, the pulp is heated in the thermochemical reactor to a temperature at which the pyrolysis of organic waste with the formation of small molecules ($CO$, $CO_2$, $H_2$, $CH_4$, methanol, dimethyl ether, etc.) produce, a solid fraction of the pyrolysis products and water with food pyrolysis is cooled, provided to lower their pressure including by performing useful work, separate the gas fraction containing flammable gases and vapors of volatile liquids from the liquid phase, the gas fraction is directed to the combustion chamber or the chemical processing of synthetic fuel, from the liquid phase extract useful products (eg, acetic acid, salt, etc,) and then return it to the technological cycle, adding to the grinding waste.

2.  Method for processing organic waste of claim 1, **characterized in that** die pressure of the pulp in a thermochemical reactor creates within the 22.0 40.0 spa, the maximum temperature in the above thermochemical reactor was adjusted to 350 - 900 C and provide exposure for these parameters in the range 0.1 - 10 minutes.

3.  Method for processing organic waste of claim 1, **characterized in that** heating pulp and cooling of water from pyrolysis products produced by heat exchange between them in the recuperative heat exchanger, where the flow of water with the pyrolysis products and flow of initial pulp move in opposite directions, and heat energy to offset heat losses sum to the flow of pulp in the secondary heat exchanger connected to the hot part of the recuperative heat exchanger, for example, taking the heat from the exhaust gases after combustion power facility.

4.  Method for processing organic waste of claim 1, **characterized in that** the allocation of non-condensable gases ($H_2$, $CO$, $CH_4$) from the pyrolysis products produced from the flow of pulp at temperatures below 370 C, regardless of pressure, and volatile liquids (ethanol, methanol, dimethyl ether, etc.) at temperatures below 240 C and pressures below 10 MPa at a time when the bulk of the water is in the condensed state, while reducing the pressure of gaseous pyrolysis products produced by throttling or completion of the work in the defender.

5.  Method for processing organic waste of claim 1, **characterized in that** when you create a pulp, in water, add additives, such as caustic soda and sodium, sulphate.

6.  A device for processing wet and liquid organic waste according to the method of claim 1, containing the gridder of waste, thermochemical reactor for pyrolysis of waste, power facility, the reactor synthesis of fuel from pyrolysis gases and the fractionator for the separation of fuel, **characterized in that** the device supply hopper with a stirrer to prepare the pulp from a mixture of grinding organic waste with water, pump or a piston to create pressure in the flow passing through the thermochemical reactor pulp, chamber for receiving and removing the solid fraction of the pyrolysis products, gas separator for release of pyrolysis gases from the liquid fraction.

7.  The device of claim 6, **characterized in that** heating the pulp up to operating-temperatures is used recuperative heat exchanger of spiral type and the additional heat exchanger for heating the pulp from the external heat source, with an additional heat exchanger from the exit pulp set camber for ash.

8. The device of claim 6, **characterized in that** the thermochemical reactor at the output of products of thermochemical reactions of the pyrolysis zone set detander for utilization of the potential energy of compression of pyrolysis products.

9. The device of claim 6, **characterized in that** as the power facility is used without booster compressor internal combustion engine, diesel engine, gas turbine engine, the steam engine, the Stirling engine, and others with an electric generator with heat recovery boiler exhaust.

Organic Wastes

FIG. 1

**FIG. 2**

## INTERNATIONAL SEARCH REPORT

| International application No. |
| --- |
| PCT/RU 2009/000730 |

**A. CLASSIFICATION OF SUBJECT MATTER**

$C10B\ 53/00$ *(2006.01)*
$F23G\ 5/027$ *(2006.01)*

According to International Patent Classification (IPC) or to both national classification and IPC

**B. FIELDS SEARCHED**

Minimum documentation searched (classification system followed by classification symbols)

B09B 3/00, C10B 47/02, 47/16, 53/00, C02F 11/10, F23G 5/00, 5/027

Documentation searched other than minimum documentation to the extent that such documents are included in the fields searched

Electronic data base consulted during the international search (name of data base and, where practicable, search terms used)

Esp@cenet, USPTO DB, PAJ

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-155286 A (MITSUBISHI MATERIALS CORP) 28.05.2002, the abstract, paragraph [0006]-[0017], figure 2 | 1-9 |
| A | JP 2007-298225 A (NITSUSHIYOO KIKO: KK et al.) 15.11.2007, the abstract, paragraph [0001], [0030]-[0035], figure 1 | 1-9 |
| A | RU 2260615 C1 (BAKHNITOV NIKOLAY ALEKSEEVICH et al.) 20.09.2005, the abstract, page 6, line 41 - page 8, line 44, figure 1 | 1-9 |
| A | RU 2275416 C1 (NIKHOMANENKO VLADIMIR ALEKSEEVICH et al.) 27.04.2006, the abstract, page 6, line 40 - page 8, line 46, figure 1 | 1-9 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>09 April 2010 (09.04.2010) | Date of mailing of the international search report<br><br>15 April 2010 (15.04.2010) |
| Name and mailing address of the ISA/<br><br><br>Facsimile No. | Authorized officer<br><br><br>Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2303192 C1

- RU 2260615 C1

### Non-patent literature cited in the description

- **D.A Zanegin ; Lav. Voskoboinikov ; V.A. Kondratyuk ; V.M. Shchelokov.** *Biomass and Bioenergy wood. Monograph,* 2008, vol. 1, 428

- *BIOMASS AND BIOENERGY WOOD. MONOGRAPH,* vol. 2, 456